# EUROPÄISCHE PATENTSCHRIFT

(11) **EP 3 105 547 B1**
(45) Veröffentlichungstag und Bekanntmachung des Hinweises auf die Patenterteilung: **11.10.2017**
(21) Anmeldenummer: 15706674.7
(22) Anmeldetag: 11.02.2015
(51) Int. Cl.: G01S 5/16, G01C 21/20, G01C 21/30, G05D 1/02, G01C 21/36, G01C 21/16

(54) **VERFAHREN ZUR ERMITTLUNG DER ABSOLUTEN POSITION EINER MOBILEN EINHEIT UND MOBILE EINHEIT**
METHOD FOR DETERMINING THE ABSOLUTE POSITION OF A MOBILE UNIT, AND MOBILE UNIT
PROCÉDÉ DE DÉTERMINATION DE LA POSITION ABSOLUE D'UNE UNITÉ MOBILE ET UNITÉ MOBILE

(30) Priorität: 15.02.2014 DE 102014002150
(43) Veröffentlichungstag der Anmeldung: 21.12.2016
(73) Patentinhaber: Audi AG, 85045 Ingolstadt (DE)
(72) Erfinder: SCHULLER, Florian, 85737 Ismaning (DE); ALTINGER, Harald, 85049 Gerolfing (DE)
(74) Vertreter: Bauer, Dominik Michael
(86) Internationale Anmeldenummer: PCT/EP2015/000295
(87) Internationale Veröffentlichungsnummer: WO 2015/120981

(56) Entgegenhaltungen:
- WO-A2-2008/009966
- DE-A1- 10 121 260
- DE-A1-102011 119 762
- US-A1- 2008 137 912
- US-A1- 2012 176 491

## Beschreibung

Die Erfindung betrifft ein Verfahren zur Ermittlung der absoluten Position einer mobilen Einheit, die wenigstens einen optischen, einen Erfassungsbereich des Umfelds der mobilen Einheit aufnehmenden Umgebungssensor aufweist, in einer vorbestimmten Navigationsumgebung, wobei optische, von dem Umgebungssensor erfassbare, unterscheidbare Marker in der Navigationsumgebung verwendet werden, welchen jeweils eine aus einem Kartendatensatz abrufbare absolute Position zugeordnet ist, wobei zur Positionsbestimmung wenigstens ein Marker in von wenigstens einem des wenigstens einen Umgebungssensors aufgenommenen Sensordaten mittels eines Bildverarbeitungsalgorithmus detektiert und identifiziert wird und unter Berücksichtigung der Position des Markers in den Sensordaten eine relative Position zwischen der mobilen Einheit und dem Marker ermittelt wird, wonach eine absolute Position der mobilen Einheit in Abhängigkeit von der relativen Position und der absoluten Position des Markers ermittelt wird. Daneben betrifft die Erfindung eine mobile Einheit, insbesondere ein Kraftfahrzeug.

Vielfach stellt sich die technische Aufgabe, eine mobile Einheit in einer bestimmten Navigationsumgebung navigieren zu können. Typische Beispiele hierfür sind die Navigation von Transporteinheiten, Robotern oder dergleichen in Lagern und Logistikzentren, aber auch die Zielführung von Kraftfahrzeugen, beispielsweise auf einem Parkplatz oder in einem Parkhaus. Insbesondere im Bereich der Kraftfahrzeuge wird diese Fragestellung dann interessant, wenn ein vollautomatisches Fahrzeugsystem vorgesehen ist, das die Fahrzeugführung vollständig übernimmt, mithin einen autonomen (vollautomatisierten) Betrieb des Kraftfahrzeugs erlaubt. Doch auch bei wenigstens teilweise manuellem Betrieb des Kraftfahrzeugs sind beispielsweise in Parkumgebungen häufig Hinweise erwünscht, beispielsweise eine Führung zu einem freien Parkplatz.

Im Bereich von mobilen Endgeräten als mobile Einheiten werden solche Positionsbestimmungsansätze im Bereich der sogenannten "Augmented Reality" (AR) verfolgt. In diesem Kontext wurden zur kamerabasierten Lokalisierung sogenannte AR-Marker vorgeschlagen, wobei es sich um auffällige optische Markierungen handelt, die spezielle Vorgaben wie Form, Farbe, Figur und dergleichen einhalten müssen. Bezüglich dieser AR-Marker wurde gezeigt, dass eine relative Positionsbestimmung bis auf Subpixelebene möglich ist. Im Hinblick auf solche AR-Marker (Augmented Reality-Marker) sei beispielsweise auf das "ARToolkit" des Human Interface Technology Laboratory der University of Washington verwiesen.

Zur absoluten Positionsbestimmung sieht der Stand der Technik heute Methoden vor, die auf globalen Navigationssatellitensystemen (GNSS), beispielsweise GPS (Global Positioning System), beruhen. Allerdings lassen sich derartige globale Navigationssatellitensysteme meist nur im Freien einsetzen, da innerhalb von Gebäuden der Empfang nur schwer oder gar nicht möglich ist. Andere Ansätze zur Positionsbestimmung, die auch innerhalb von Gebäuden angewendet werden können, sind solche, die auf Basis von Funksignalen arbeiten. Als Beispiele seien hier sogenannte Laufzeitverfahren und Verfahren, die auf der Empfangssignalstärke basieren, genannt. Dies erfordert allerdings das aufwendige Installieren der geeigneten technischen Geräte innerhalb der Navigationsumgebung, beispielsweise eines Parkhauses.

Technologien, die auf optischer Positionsbestimmung aufgrund von Markern basieren, sind dagegen grundsätzlich einfacher zu realisieren, da beispielsweise bei der Verwendung von AR-Markern lediglich diese zusätzlich angebracht werden können, um eine zumindest relative Position zu bestimmen. Dies geschieht wie auch bei anderen Markern über Bildverarbeitungsalgorithmen, die aufgrund der Art der Darstellung des Markers in den Sensordaten, beispielsweise einem Kamerabild, unter Kenntnis der tatsächlichen Geometrie des Markers eine relative Position, die auch einen Abstand umfasst, herleiten können, wobei zur Ermittlung eines Abstands häufig auch die Eigenschaften des entsprechenden Umgebungssensors bekannt sein müssen. Um die teilweise eher klein in den Sensordaten dargestellten Marker zu detektieren und zu identifizieren, ist die Verarbeitung einer äußerst großen Datenmenge durch die Bildverarbeitungsalgorithmen nötig, insbesondere wenn eine robuste Funktionsweise gewährleistet werden soll. Dies sorgt für einen hohen, große Kosteninvestition mit sich bringenden Rechenaufwand, der grundsätzlich eher unerwünscht ist. Ein weiteres Problem der Verwendung von dedizierten optischen Markern ist, dass jene erst angefertigt/aufgebracht werden müssen.

Dazu sei an dieser Stelle noch angemerkt, dass, wenn im Rahmen dieser Beschreibung von einer "Position" der mobilen Einheit die Rede ist, diese neben einer Ortsangabe üblicherweise auch die Orientierung der mobilen Einheit umfasst, nachdem diese häufig benötigt wird, insbesondere für Navigationsanwendungen.

Während eine relative Position nur bezüglich des optischen Markers gilt, ermöglicht es eine absolute Position für die Navigationsumgebung, die mobile Einheit einfach auf einer Karte der Navigationsumgebung in einem wenigstens für diese geltenden Koordinatensystem zu lokalisieren und in Beziehung zu anderen Merkmalen der Navigationsumgebung zu setzen.

WO 2009/098319 A2 betrifft eine Navigationsvorrichtung für ein Kraftfahrzeug. Dabei werden Positionsmarker an festen Positionen entlang eines Highways verwendet, wobei Bilder einer Kamera, die eine Szene vor dem Kraftfahrzeug aufnehmen, ausgewertet werden, um Positionsmarker zu identifizieren, wonach eine absolute Position des Positionsmarkers unter Nutzung von Informationen, die dem Marker zugeordnet sind, bestimmt wird, ferner ein Abstand zwischen dem Kraftfahrzeug und dem Positionsmarker durch Bildverarbeitung ermittelt wird und aus der absoluten Position und dem Abstand eine Abschätzung der Position des Kraftfahrzeugs bestimmt wird. Dabei können die Marker selbst Informationen zu ihrer Position oder Informationen, aus denen ihre Position bestimmt werden kann, enthalten, wobei die Positionsinformation der Positionsmarker auch aus einem Speicher abgerufen werden kann.

DE 10 2009 045 326 A1 betrifft ein Verfahren und ein System zum Aufbau einer Datenbank zur Positionsbestimmung eines Fahrzeuges mithilfe von natürlichen Landmarken. Dort sollen in einem vorgegebenen Streckenabschnitt vor Erreichen einer Gefahrenstelle Bilder von der Umgebung des Fahrzeugs aufgenommen werden, aus den Umgebungsbildern mindestens zwei natürliche Landmarken bestimmt werden, das Erreichen der Gefahrenstelle detektiert werden und bei Erreichen der Gefahrenstelle mindestens zwei der bestimmten Landmarken sowie der jeweils zugehörigen aktuellen Position des Fahrzeuges zum Zeitpunkt der Aufnahme des jeweiligen Umgebungsbilds gespeichert werden. Die Idee dort ist es, dann, wenn die Positionsbestimmung über ein herkömmliches Ortungssystem einer vorgegebenen Genauigkeit nicht genügt, die Positionsbestimmung relativ zu einer Gefahrenstelle über Landmarken vorzunehmen. Dabei ist es denkbar, die Videosensorik und/oder die Recheneinheit nur innerhalb des Streckenabschnitts vor Erreichen einer Gefahrenstelle zu aktivieren, in welchem Umgebungsbilder aufgenommen und Landmarken bestimmt und gegebenenfalls abgespeichert werden.

DE 41 38 270 A1 betrifft ein Verfahren zur Navigation eines selbstfahrenden Landfahrzeugs, wobei Marken während der Fahrt erfasst, digitalisiert und mit abgespeicherten Daten verglichen werden, um Abweichungen von Sollwerten festzustellen, die zu entsprechenden Navigationsstörsignalen verarbeitet werden, wobei die abgespeicherten Daten während einer Lernfahrt erzeugt werden. Die Idee dort ist es, natürliche im Raum befindliche Landmarken zu verwenden. Es wird eine um eine Achse senkrecht und eine Achse waagerecht zur Fahrtebene schwenkbare Videokamera verwendet, die die Landmarken erfassen soll, so dass es schließlich möglich ist, die Ist-Position des Fahrzeugs relativ zu einem Sollpunkt und die aktuelle Fahrzeugrichtung in Bezug auf eine Sollrichtung zu berechnen. Anhand der gespeicherten Landmarken soll die Kamera nacheinander auf verschiedene Landmarken gerichtet werden. Hierzu muss allerdings die zur Strecke gehörige Fahrzeit ausreichen.

DE 10 2011 112 404 A1 betrifft ein Verfahren zum Bestimmen der Position eines Kraftfahrzeugs, welches ebenso Marker, dort Objekte, verwendet, und im Wesentlichen ein Vorgehen gemäß dem Oberbegriff des Anspruchs 1 offenbart. Dabei kann allerdings die mit dem Satellitenortungssystem ermittelte Position auch zum Identifizieren des Objekts genutzt werden.

DE 101 21 260 A1 betrifft ein Navigationssystem als Erweiterung bei satellitenunterstützten Navigationsgeräten im "Indoor-Bereich", wobei ein Parkplatz des Kraftfahrzeugs beispielsweise auf einem "Carfinder-Key" abgespeichert werden kann.

WO 2008/009966 A2 betrifft ein Verfahren zur Bestimmung der Position eines Fahrzeugs auf einer Karte. Dies soll insbesondere der Erhöhung der Sicherheit an Kreuzungen dienen. Hierzu wird ein Bild einer Szene von dem Fahrzeug aufgenommen, es werden Merkmalen zugeordnete Punkte in der Szene identifiziert und die Punkte im aufgenommenen Bild mit Punkten in der Karte verglichen, um die Position des Fahrzeugs zu bestimmen. Es ist denkbar, bei später aufgenommenen Bildern den Suchbereich abhängig von einer vorhergesagten Position des gesuchten Punktes einzuschränken.

DE 10 2011 119 762 A1 betrifft ein System und ein Verfahren zur Positionsbestimmung eines Kraftfahrzeugs, wobei das System eine digitale Karte umfasst, in der Daten über ortsspezifische Merkmale lokalisiert verzeichnet sind. Über eine Umfelderkennungsvorrichtung werden die ortsspezifischen Merkmale erfasst, so dass ein Lokalisierungsmodul durch Abgleich der erfassten Daten und der in der digitalen Karte verzeichneten Daten das Fahrzeug lokalisieren kann.

US 2012/0176491 A1 betrifft die kamerabasierte Positionsfindung und Navigation aufgrund von Bildverarbeitung. Dort werden Bilder aufgenommen, die eine selbstadressierende Quelle, beispielsweise einen QR-Code, enthalten.

Wird eine Verschiebung zwischen der mobilen Einrichtung und der selbstadressierenden Quelle sowie die Position der selbstadressierenden Quelle berücksichtigt, kann die mobile Einrichtung ihre eigene Position feststellen.

US 2008/0137912 A1 betrifft Vorrichtung und Verfahren zur Erkennung der Position unter Verwendung von einer Kamera. Über eine Bildaufnahmeeinrichtung kann eine Positionsidentifikationsmarke mit einer Kamera aufgenommen werden. Wird ein Abstand und ein Auftreffwinkel zu der Positionsidentifikationsmarke ermittelt und werden Ortsinformationen zu der Marke abgerufen, kann eine aktuelle Position abgeschätzt werden.

Der Erfindung liegt die Aufgabe zugrunde, eine robustere und verlässlichere Erkennung von optischen Markern unterschiedlicher Art in einem Positionsbestimmungssystem zu ermöglichen.

Zur Lösung dieser Aufgabe sind bei einem Verfahren der eingangs genannten Art erfindungsgemäß die Merkmale des Anspruchs 1 vorgesehen.

Nachdem im Kartendatensatz sowohl eine Beschreibung des Markers, die dessen Identifikation ermöglicht, als auch eine absolute Position des Markers enthalten ist, ist es mithin möglich, Marker in Sensordaten der optischen Umgebungssensoren, beispielsweise einer Kamera, zu lokalisieren und zu identifizieren, so dass neben der relativen Position der mobilen Einheit zu dem Marker auch die absolute Position der mobilen Einheit in der Navigationsumgebung entsprechend einem Koordinatensystem des Kartendatensatzes bestimmt werden kann, indem die absolute Position des Markers verwendet wird. Nachdem somit aber nun eine absolute Position der mobilen Einheit auch innerhalb des Kartendatensatzes bekannt ist, lassen sich die Erfassungsbereiche der Umgebungssensoren, meist mehrere Kameras, genauso ermitteln wie die optischen Marker, die durch die Erfassungsbereiche der Umgebungssensoren erfasst werden können. Das bedeutet, es ist zumindest auf grobe Art und Weise a priori bekannt, wo in den Sensordaten zum aktuellen Zeitpunkt optische Marker aufgefunden werden können. Diese Information wird im Rahmen der vorliegenden Erfindung nun genutzt, um zum aktuellen Zeitpunkt vorliegende Sensordaten vorzuselektieren, was zu einer Reduktion der notwendigen Rechenleistung sowie zu einer erhöhten Robustheit führt, da Fehldetektionen reduziert werden können. Auf diese Weise kann hochgenau und verlässlich basierend auf der zuletzt ermittelten Position eine aktuelle Position der mobilen Einheit festgestellt werden.

Die Erfindung sieht vor, dass nur ein Ausschnitt eines in den Sensordaten enthaltenen Bildes, in dem ein Marker erwartet wird, ausgewertet wird. Zusätzlich kann dabei vorgesehen sein, dass als Einschränkung nur Sensordaten von Umgebungssensoren, in deren Erfassungsbereich ein Marker befindet, ausgewertet werden. Eine erste Grobauswahl von Sensordaten, die mit dem erfindungsgemäßen Verfahren möglich ist, selektiert mithin die Umgebungssensoren, in deren Erfassungsbereich ein Marker erwartet wird. Umgebungssensoren, in deren Erfassungsbereich mit höchster Wahrscheinlichkeit kein Marker zu sehen sein wird, müssen auch nicht durch die Bildverarbeitungsalgorithmen weiter ausgewertet werden. Bereits damit ist eine deutliche Reduzierung des Rechenaufwands möglich. Wird jedoch, wovon auszugehen ist, die aktuelle Position in regelmäßigen Abständen bestimmt, ist noch deutlich genauer abschätzbar, welche Sensordaten tatsächlich Informationen zu einem Marker enthalten können, so dass in einer Verfeinerung für einzelne Umgebungssensoren auch Bildausschnitte definiert werden können, in denen sich der Marker mit größter Wahrscheinlichkeit befindet. Diese Vorselektierung sorgt für ein äußerst verlässliches Auffinden und Identifizieren von Markern in den verbliebenen, tatsächlich auszuwertenden Sensordaten.

Eine besonders vorteilhafte Ausgestaltung der vorliegenden Erfindung sieht vor, dass in dem Kartendatensatz die nach wenigstens einer Eigenschaft klassifizierbaren Marker und ihre Klasse gespeichert sind, wobei wenigstens ein zur Auswertung der Sensordaten eingesetzter Bildverarbeitungsalgorithmus und/oder eine Parametrierung des Bildverarbeitungsalgorithmus in Abhängigkeit der Klasse des in den Sensordaten zu detektierenden und zu identifizierenden Markers gewählt wird. Diese Ausgestaltung ermöglicht ein noch gezielteres Detektieren und Identifizieren von optischen Markern, indem der Bildverarbeitungsalgorithmus im Hinblick auf ihre zu erwartenden Eigenschaften ausgewählt und/oder parametriert wird, insbesondere indem Schwellwerte angepasst werden und/oder Filterparameter neu gesetzt werden. So kann beispielsweise zwischen farbigen und nicht farbigen Markern, speziellen Markerformen und dergleichen unterschieden werden, indem diese Marker unterschiedlichen Klassen zugeordnet werden, die konkreten Einfluss auf die Auswahl und Parametrierung der Bildverarbeitungsalgorithmen nehmen und den Kartendatensatz mithin sinnvoll erweitern. Konkret kann eine Klassifizierung der Marker also beispielsweise anhand ihrer geometrischen Form und/oder einer Ein- oder Mehrfarbigkeit und/oder ihrer Zwei- oder Dreidimensionalität und/oder ihrer inneren Strukturierung vorgenommen werden.

Es ist ferner vorgesehen, dass der Kartendatensatz Informationen zu möglichen Sichthindernissen enthält, die bei der Ermittlung der Einstellungsdaten berücksichtigt werden. Idealerweise enthält der Kartendatensatz auch eine komplette Karte der Navigationsumgebung, die dann auch Wände und sonstige Sichthindernisse enthalten kann, so dass festgestellt werden kann, ob von der zuletzt ermittelten Position der mobilen Einheit zu dem Marker (bzw. einer daraus abgeleiteten geschätzten aktuellen Position der mobilen Einheit, die dann auch als zuletzt ermittelte Position aufgefasst werden kann), genauer im Erfassungsbereich eines Umgebungssensors, eine Sichtlinie zu dem Marker besteht oder ob ein optisches Hindernis im Weg ist. So werden auch nur tatsächlich zu sehende Marker bei der Ermittlung der Einstellungsdaten berücksichtigt. In einen solche auch Sichthindernisse enthaltenden Kartendatensatz können selbstverständlich auch temporäre Sichthindernisse eingetragen werden, beispielsweise im Fall eines Parkhauses als Navigationsumgebung geparkte Kraftfahrzeuge und dergleichen.

Eine vorteilhafte Weiterbildung der Erfindung sieht vor, dass zur Ermittlung der aktuellen Position eine aus der Auswertung der Sensordaten bezüglich der Marke abgeleitete Positionshypothese mit wenigstens einer weiteren Positionshypothese fusioniert wird. In dieser Ausgestaltung wird mithin aus der absoluten Position des Markers und der relativen Position der mobilen Einheit zu dem Marker zunächst eine Positionshypothese auf Basis der Markernavigation gebildet, welche Eingang findet in eine wie im Stand der Technik grundsätzlich bekannt durchzuführende Fusionierung mehrerer Hypothesen zu einer aktuellen Position der mobilen Einheit. In diesem Sinne bietet das erfindungsgemäße Verfahren mithin eine verbesserte weitere, im Rahmen einer Fusionierung zu berücksichtigende Positionshypothese.

Dabei kann die oder eine weitere Positionshypothese aus Odometriedaten und/oder Beschleunigungssensordaten wenigstens eines Beschleunigungssensors der mobilen Einheit ermittelt werden und/oder die oder eine weitere Positionshypothese aus von mit Sensoren der Navigationsumgebung gewonnenen Hypothesedaten ermittelt werden und/oder die oder eine weitere Positionshypothese anhand der Empfangsstärke wenigstens eines WLAN-Signals an der aktuellen Position der mobilen Einheit ermittelt werden. Neben den soeben genannten Möglichkeiten, weitere Positionshypothesen abzuleiten, können selbstverständlich auch andere Möglichkeiten zur Ermittlung von Positionshypothesen, so sie in der Navigationsumgebung wenigstens teilweise einsetzbar sind, berücksichtigt werden. Ein Beispiel für solche anderen Positionsbestimmungsmöglichkeiten ist die Positionsbestimmung über ein globales Navigationssatellitensystem (GNSS), insbesondere GPS, was auch bei geschlossenen Räumlichkeiten wenigstens teilweise verfügbar sein kann.

Die im Rahmen einer Fusionierung von Positionshypothesen zu einer letztlich ermittelten aktuellen Position im bekannten Stand der Technik bereits am häufigsten eingesetzte Grundlage ist eine Ermittlung der aktuellen Bewegung der mobilen Einheit, insbesondere über Odometriedaten, die in einem Kraftfahrzeug als mobile Einheit ohnehin vorliegen, oder über das Auslesen von Beschleunigungssensoren, beispielsweise einer Inertialplattform (abgekürzt oft IMU - inertial measurement unit), die üblicherweise auch in mobilen Endgeräten häufig verbaut sind und Annahmen über die Bewegung des mobilen Endgeräts erlauben. Nachdem bereits Parkhäuser als Navigationsumgebungen bekannt wurden, in denen WLAN-Basisstationen integriert sind oder nachgerüstet werden, bietet es sich an, beispielsweise die Empfangsstärken verschiedener WLAN-Basisstationen zur Ermittlung einer weiteren Positionshypothese heranzuziehen. So lässt sich beispielsweise für die unterschiedlichen Feldstärken der WLAN-Basisstationen für unterschiedliche absolute Positionen in der Navigationsumgebung ein "Fingerprint" abspeichern, der bevorzugt in dem Kartendatensatz erhalten sein kann. Das Positionsbestimmungssystem vergleicht dann die aktuellen Empfangsstärken der WLAN-Basisstationen mit den als Fingerprint gespeicherten Referenzdatensätzen und kann damit eine WLAN-Positionshypothese aufstellen, die zweckmäßig ebenso in die Fusionierung eingehen kann. Eine weitere häufig genannte Datenquelle im Hinblick auf die Positionsbestimmung einer mobilen Einheit sind Sensoren der Navigationsumgebung selbst, beispielsweise Laserscanner oder Kameras, die die mobile Einheit detektieren und mithin selbst Positionshypothesedaten zur Verfügung stellen können, welche beispielsweise über eine Funkverbindung bzw. sogar die angesprochene WLAN-Verbindung an die mobile Einheit übermittelt und dort verwendet werden können. Eine weitere zu nennenden Möglichkeit betrifft die Auswertung von Sensordaten anderer Umgebungssensoren der mobilen Einheit. So können beispielsweise über Entfernungen messende Umgebungssensoren zur Detektion von in dem Kartendatensatz eingespeicherten Wänden und/oder sonstigen Hindernissen eingesetzt werden, um hierauf basierend eine Position abzuschätzen, als eine Positionshypothese abzuleiten. Die Marker-Positionshypothese und die weiteren Hypothesen, also beispielsweise die WLAN-Positionshypothese, die Odometrie-Positionshypothese und/oder die Navigationsumgebungssensorik-Hypothese, werden dann auf bekannte Art und Weise miteinander fusioniert, um eine möglichst genaue aktuelle Position der mobilen Einheit zu erhalten.

Wie bereits erwähnt, ist es im Hinblick auf eine WLAN-Positionshypothese besonders zweckmäßig, wenn ein Positionen in der Navigationsumgebung zugeordnete WLAN-Empfangsstärken umfassender Kartendatensatz verwendet wird, da dann ein Abgleich der aktuellen WLAN-Empfangsstärken in der mobilen Einheit mit diesen "Fingerprints" erfolgen kann.

Zum Beginn einer Navigation in der Navigationsumgebung wird zunächst eine initiale Position der mobilen Einheit bestimmt. Hierzu sieht eine zweckmäßige Ausgestaltung der vorliegenden Erfindung vor, dass eine initiale Position im Bereich eines Zugangs der Navigationsumgebung ermittelt wird, insbesondere durch Detektion und Identifikation wenigstens eine Zugangsmarkers in den Sensordaten der Umgebungssensoren. So existieren in Parkhäusern als Navigationsumgebungen häufig Schrankenbereiche, in denen eine initiale Positionsbestimmung erzwungen werden kann. Dabei kann eine Schranke selbst einen solchen Zugangsmarker darstellen, diese können jedoch auch leicht erkennbar anderweitig im Zugangsbereich der Navigationsumgebung angeordnet werden, um eine möglichst exakte Positionsbestimmung zu erlauben.

Eine weitere Ausführungsform des erfindungsgemäßen Verfahrens sieht vor, dass als zuletzt ermittelte Position zur Ermittlung der Einstellungsdaten eine unter Berücksichtigung von Odometriedaten und/oder Beschleunigungssensordaten wenigstens eines Beschleunigungssensors der mobilen Einheit ermittelte Positionshypothese ausgehend von der zuvor zuletzt unter Nutzung einer Auswertung der Sensordaten bezüglich der Marker ermittelten Position der mobilen Einheit verwendet wird. Auf diese Weise wird die meist ohnehin ständig mitgeführte und bekannte Odometrie-Information der mobilen Einheit genutzt, um die Ermittlung der Einstellungsdaten weiter zu verfeinern, indem in einer ersten groben Abschätzung der aktuellen Position der mobilen Einheit die aus den ständig vorhandenen Zusatzinformationen gefolgerten Bewegungen der mobilen Einheit berücksichtigt werden. Dies erhöht die Verlässlichkeit des erfindungsgemäßen Verfahrens weiter und ermöglicht es, durch genauere Einschränkung der möglichen Sensordaten den Rechenaufwand weiter zu reduzieren.

In diesem Zusammenhang ist es auch äußerst zweckmäßig, wenn eine Qualitäts- und/oder Fehlerangabe der zuletzt bestimmten Position bei der Stärke der Einschränkung der zur Detektion und Identifikation des wenigstens einen Markers auszuwertenden Sensordaten der Umgebungssensoren berücksichtigt wird. Wird beispielsweise eine Fusionierung von Positionshypothesen durchgeführt, entsteht häufig auch ein Wert, der die Verlässlichkeit der aktuellen Position, wie sie bestimmt wurde, angibt, mithin deren Qualität und/oder Fehlerbehaftung beschreibt. Ist nun bekannt, dass die zuletzt bestimmte Position eher ungenauer ist, empfiehlt es sich, eher mehr Sensordaten der Auswertung im Hinblick auf die Detektion und Identifikation der Marker zugänglich zu machen; wird die zuletzt bestimmte Position als genauer angesehen, lässt sich auch der Anteil der auszuwertenden Sensordaten weiter einschränken.

Besonders vorteilhaft ist es, wenn der Kartendatensatz in der mobilen Einheit gespeichert wird. Dann kann die komplette Auswertung und Positionsbestimmung in dem Positionsbestimmungssystem erfolgen, ohne dass ein ständiger bzw. häufiger Datenaustausch, beispielsweise mit einem Server der Navigationsumgebung, notwendig wäre. Auch dies stellt eine deutliche Aufwandsreduzierung dar. Dabei kann es insbesondere zweckmäßig sein, die Größe des Kartendatensatzes eher kompakt zu halten, mithin eine kleine Datenmenge als Kartendatensatz vorzusehen.

In einer besonders bevorzugten Ausgestaltung der vorliegenden Erfindung wird der Kartendatensatz aus den Sensordaten des wenigstens einen Umgebungssensors nach Aufnahme eines Bildes eines die Kartendaten optisch verschlüsselnden Informationsträgers ermittelt. Es wird in diesem Fall ein statischer Informationsträger verwendet, der bevorzugt im Bereich des Zugangs der Navigationsumgebung angeordnet ist und in jedem Fall durch die Umgebungssensoren der mobilen Einheit aufgenommen wird, um eine unidirektionale Kommunikation zu realisieren, die aber für diesen Zweck völlig ausreichend ist. In dem optischen Informationsträger sind mithin die Kartendaten des Kartendatensatzes geeignet verschlüsselt enthalten, so dass diese nach einer möglichst einfachen Auswertung extrahiert werden können. Beispielsweise kann der Informationsträger bei einem Parkhaus als Navigationsumgebung unterhalb einer im Zugangsbereich häufig ohnehin vorgesehenen Hausordnung vorgesehen werden oder dergleichen.

Insbesondere bietet sich als Informationsträger ein zweidimensionaler Strichcode an, beispielsweise ein sogenannter QR-Tag (Quick Response-Tag). Das letztgenannte Beispiel für einen zweidimensionalen Strichcode basiert auf dem QR-Code und wird häufig im Bereich der Logistik bzw. der Werbung eingesetzt. Derartige zweidimensionale Strichcodes können bis zu drei Kilobyte an Daten aufnehmen, die ausreichend sind, um die optischen Marker und ihre absoluten Positionen zu codieren. Werden beispielsweise AR-Tags als eindeutige optische Marker, die leicht in Navigationsumgebungen, beispielsweise Parkhäusern, angebracht werden können, verwendet, lässt sich deren Identifikationsnummer sowie ihre absolute Position leicht in einem zweidimensionalen Strichcode codieren. Geht man von der Angabe der absoluten Position als WGS84-Positionen mit Höhenangabe aus, benötigen diese 24 Bit. Mit 7 Bit sind bis zu 128 AR-Tags unterscheidbar. Die Zuordnung der AR-Tag-Identifikatoren zu den Mustern lässt sich mittels einer Norm festlegen. Dies würde es ermöglichen, in zweidimensionalen Strichcodes, die 3 Kilobyte an Daten fassen können, bis zu 99 Positionen zu codieren.

Der besondere Vorteil der Verwendung eines solchen optischen Informationsträgers, insbesondere eines zweidimensionalen Strichcodes ist, dass letztlich keine weitere komplexe Technologie außerhalb der mobilen Einheit verwendet werden muss, insbesondere also keine Funktechnologien, beispielsweise WLAN-Technologien, erforderlich sind. Nichtsdestotrotz ist es alternativ selbstverständlich auch möglich, dass der Kartendatensatz über eine Funkverbindung, insbesondere eine WLAN-Verbindung, an das Kraftfahrzeug übermittelt wird.

In einer zweckmäßigen Weiterbildung des Verfahrens wird bei einer Detektion und Identifikation von wenigstens zwei Markern während eines einzigen Positionsbestimmungsvorgangs eine Triangulation aufgrund der relativen Position der Marker zu der mobilen Einheit vorgenommen. Auf diese Weise ist eine deutliche Steigerung der Genauigkeit der Positionsbestimmung möglich, nachdem zwei bekannte relative Positionen eine Triangulation ermöglichen. Zweckmäßig ist eine Triangulation auch dann, wenn die relative Position zu dem Marker nicht vollständig bestimmt wird, sondern beispielsweise nur ein Abstand bekannt ist oder dergleichen. Sollten im Rahmen der Triangulation mehrere mögliche absolute Positionen der mobilen Einheit auftreten, kann eine absolute Position anhand von Odometriedaten und/oder Beschleunigungssensordaten wenigstens eines Beschleunigungssensors der mobilen Einheit ausgewählt werden. Die Positionshistorie erlaubt es mithin, unplausible Triangulationen zu verwerfen, so dass auch diesbezüglich die Robustheit erhöht werden kann.

Als mobile Einheit kann vorzugsweise ein Kraftfahrzeug und/oder ein mobiles Endgerät verwendet werden. Insbesondere lassen sich während eines einzigen Navigationsvorgangs auch sowohl ein Kraftfahrzeug als auch ein mobiles Endgerät zweckmäßig einsetzen, denn eine besonders bevorzugte Ausgestaltung der Erfindung sieht vor, dass bei einem Abstellen eines Kraftfahrzeugs als mobile Einheit innerhalb der Navigationsumgebung wenigstens die ermittelte Abstellposition des Kraftfahrzeugs an ein mit dem Kraftfahrzeug verbundenes, als weitere mobile Einheit genutztes mobiles Endgerät übertragen und dort zur Navigation zu dem abgestellten Kraftfahrzeug innerhalb der Navigationsumgebung genutzt wird.

Dem liegt die Erkenntnis zugrunde, dass sich nicht nur Kraftfahrzeuge zweckmäßig als mobile Einheiten im Rahmen der vorliegenden Erfindung einsetzen lassen, da sie die benötigten Umgebungssensoren ohnehin bereits aufweisen und mithin keine spezielle Aufrüstung des Kraftfahrzeugs erforderlich ist. Auch werden in Kraftfahrzeugen regelmäßig bereits Odometriedaten bestimmt, die, wie dargelegt wurde, in vielen Ausführungsbeispielen nützlich sind. Jedoch weisen neben einem Kraftfahrzeug auch mobile Endgeräte, beispielsweise Smartphones oder Tablets, häufig die benötigten Grundvoraussetzungen für das erfindungsgemäße Verfahren auf, nachdem sie mit ihren Kameras die benötigten Umgebungssensoren aufweisen und üblicherweise mit Beschleunigungssensoren versehen sind, über die sich ihre Bewegung zur Ermittlung von Odometriedaten nachverfolgen lässt. Wurde also unter Nutzung des Positionsbestimmungssystems beispielsweise ein Kraftfahrzeug als mobile Einheit zu einem freien Parkplatz geleitet, ergibt sich nun die äußerst vorteilhafte Möglichkeit, die finale Parkposition des Kraftfahrzeuges auf das mobile Endgerät, beispielsweise ein Smartphone, zu übertragen, nachdem auch dort ein Positionsbestimmungssystem der erfindungsgemäßen Art realisiert werden kann. Mithilfe der Kamera kann das mobile Endgerät die optischen Marker erkennen und eine Marker-Positionshypothese genauso erstellen wie beispielsweise eine Odometrie-Positionshypothese oder auch eine WLAN-Positionshypothese, nachdem mobile Endgeräte häufig auch WLAN-fähig sind. Durch die Fusion verschiedener Positionshypothesen kann eine höhere Robustheit und Genauigkeit erzielt werden und es ist mithilfe des mobilen Endgeräts möglich, den Fahrer innerhalb der Navigationsumgebung, beispielsweise eines Parkhauses, wieder zurück zu seinem Fahrzeug, also der finalen Parkposition, zu leiten. Selbstverständlich sind auch andere Navigationsaufgaben mittels des mobilen Endgeräts als mobile Einheit ausführbar, beispielsweise die Navigation zu einem Ausgang des Parkhauses, einem Kassenautomaten und dergleichen.

Wie bereits erwähnt, ist es gerade im Kontext der Verwendung eines Kraftfahrzeugs oder eines mobilen Endgeräts äußerst zweckmäßig, wenn die Navigationsumgebung ein Parkhaus ist. In vielen Parkhäusern ist eine Navigation über GPS oder sonstige GNSS nicht oder nur sehr eingeschränkt möglich, so dass das erfindungsgemäße Verfahren hier Abhilfe schafft und eine Navigation auch ohne derartige für Gelände unter dem freien Himmel vorgesehene Navigationsmöglichkeiten erlaubt. Mithin ergibt sich als sehr spezielles Ausführungsbeispiel der vorliegenden Erfindung die Navigation eines Kraftfahrzeugs innerhalb eines Parkhauses, wobei besonders zweckmäßig auf aktive Sensorik seitens des Parkhauses (Laserscanner, Kameras, GPS-Repeater, Funk-Beacons) verzichtet werden kann, wenn der Kartendatensatz wie beschrieben über einen optischen Informationsträger durch die Umgebungssensoren des Kraftfahrzeugs eingelesen werden kann. Die Navigation innerhalb eines Gebäudes von der Einfahrt bis zu einem freien Parkplatz als auch umgekehrt wird ermöglicht; das Positionsbestimmungssystem kann bereits in GPS-abgeschatteten Bereichen initialisiert werden. Auch seitens des Kraftfahrzeugs ist hier keine Nachrüstung an Sensorik erforderlich, nachdem insbesondere Umgebungssensoren bei vielen modernen Kraftfahrzeugen ohnehin vorgesehen sind.

Wie bereits erwähnt wurde, bieten sich als Marker insbesondere AR-Tags an, die im Stand der Technik bereits grundsätzlich bekannt sind. Es ist dann ein bestimmter Markertyp gegeben, der leicht erkennbar und unterscheidbar nachgerüstet werden kann, insbesondere in Parkhäusern und dergleichen. Selbstverständlich sind jedoch auch andere Marker denkbar, die bevorzugt ähnlich gut detektierbar sind, sich aber auch hinreichend unterscheiden, so dass eine Detektion möglich ist.

Eine besonders vorteilhafte Ausgestaltung der vorliegenden Erfindung, die im Übrigen auch unabhängig von der Einschränkung der Sensordaten zur Auswertung vorteilhaft realisiert werden kann, kommt sogar ohne das Anbringen spezieller Marker für die Positionsbestimmung aus, nachdem dort vorgesehen ist, dass als Marker wenigstens ein originär einem weiteren Zweck dienendes Umgebungsmerkmal der Navigationsumgebung verwendet wird. Diese Ausgestaltung sieht also vor, dass ohnehin in der Navigationsumgebung bereits vorhandene Merkmale, die originär nicht der Positionsbestimmung, sondern einem weiteren Zweck dienen, einer zusätzlichen Verwendung zugeführt werden, nämlich als Marker für das Positionsbestimmungssystem. Solche "natürlichen" Merkmale ermöglichen es mithin, eine Navigation durch die Navigationsumgebung auch zu ermöglichen, ohne dass speziell dedizierte optische Marker angebracht werden. Somit sind keine zusätzlichen, für den Menschen ungewöhnlich wirkenden Markierungen notwendig.

Als besonders vorteilhaft erweist sich diese Ausgestaltung in Kombination mit einer Auswahl und/oder Parametrierung der Bildverarbeitungsalgorithmen in Abhängigkeit einer Klasse des Markers. Denn gerade dann, wenn ohnehin vorhandene Merkmale der Navigationsumgebung eingesetzt werden, existiert eine gewissen Variabilität der Marker, so dass unterschiedliche Parameter und/oder unterschiedliche Bildverarbeitungsalgorithmen benötigt werden, um eine verlässliche Detektion und Identifikation der Marker zu gewährleisten. In diesem Zusammenhang bietet es sich an, diese "natürlichen" Merkmale der Navigationsumgebung zu klassifizieren und mittels des Kartendatensatzes ihre Klasse auch dem Positionsbestimmungssystem zur Kenntnis zu bringen, welches eine entsprechende Auswahl und/oder Parametrierung der Bildverarbeitungsalgorithmen vornehmen kann. Beispielsweise können Sensorschwellwerte und/oder Sensorfiltertechniken angepasst und/oder aktiviert und/oder deaktiviert werden.

Handelt es sich bei der Navigationsumgebung um ein Parkhaus, können als optische Marker Fahrbahnmarkierungen und/oder Parkplatznummern und/oder Notausgangsschilder und/oder Feuerlöscherhinweisschilder und/oder Werbeplakate verwendet werden. Gerade in Parkhäusern existieren bereits zum Teil standardisierte Markierungen, die originär anderen Zwecken dienen, deren Position zum Teil durch Normen vorgegeben ist und/oder in Gebäudekarten verzeichnet ist. Beispiele für solche natürlichen Marker sind Parkplatznummern, Fahrbahnmarkierungen, farbige Parkdeckebenen, Werbetafeln, Notausgangsbeleuchtungen, Verkehrszeichen, Hinweisschilder für Feuerlöscher und dergleichen. Vorzugsweise kann es sich bei den "natürlichen" Markern, die diskutiert werden, um für Parkraum durch Normen vorgesehene Merkmale handeln. Besonders eignen sich zur Bestimmung einer relativen Position Hinweisschilder und/oder Leuchten, insbesondere die genannten Notausgangsschilder und/oder Feuerlöscherhinweisschilder. Diese sind, sobald ihre Klasse, wie dargelegt wurde, bekannt ist, auch besonders einfach über entsprechende Algorithmen zu detektieren, was jedoch häufig auch für die gezielt als gut lesbar angebrachten Fahrbahnmarkierungen und/oder Parkplatznummern gilt. Ersichtlich sind eine Vielzahl von Möglichkeiten zur Auswahl zweckmäßiger Klassen von solchen originär für andere Zwecke vorgesehenen Merkmalen denkbar.

Neben dem Verfahren betrifft die vorliegende Erfindung auch eine mobile Einheit, umfassend wenigstens einen optischen, einen Erfassungsbereich des Umfelds der mobilen Einheit aufnehmenden Umgebungssensor und ein Positionsbestimmungssystem mit einem zur Durchführung des erfindungsgemäßen Verfahrens ausgebildeten Steuergerät. Sämtliche Ausführungen bezüglich des erfindungsgemäßen Verfahrens lassen sich analog auf die erfindungsgemäße mobile Einheit übertragen.

Bei der mobilen Einheit handelt es sich bevorzugt um ein Kraftfahrzeug oder ein mobiles Endgerät, beispielsweise ein Smartphone, welche zur Navigation innerhalb der Navigationsumgebung, welche insbesondere ein Parkhaus ist, eingesetzt werden. Das Positionsbestimmungssystem kann mithin, allgemein gesprochen, auch Teil eines Navigationssystems sein, das die mobile Einheit bzw. den Führer der mobilen Einheit an einen bestimmten Zielort navigieren kann, im Beispiel des Parkhauses an einen Parkplatz, eine Ausfahrt, einen Ausgang, einen Kassenautomaten, zurück zum eigenen Kraftfahrzeug und dergleichen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan des erfindungsgemäßen Verfahrens,
- Fig. 2: ein Kraftfahrzeug als mobile Einheit in einem Zugangsbereich eines Parkhauses,
- Fig. 3: ein Kraftfahrzeug als mobile Einheit in einem Parkhaus mit Markern,
- Fig. 4: eine Prinzipskizze zur Verwendung von originär einem anderen Zweck dienenden Markern,
- Fig. 5: eine Prinzipskizze zur Triangulation,
- Fig. 6: eine Zeichnung zur Ermittlung einer Positionshypothese an-hand von Empfangsstärken,
- Fig. 7: die Nutzung eines mobilen Endgeräts als mobile Einheit, und
- Fig. 8: eine erfindungsgemäße, als Kraftfahrzeug ausgebildete mobile Einheit.

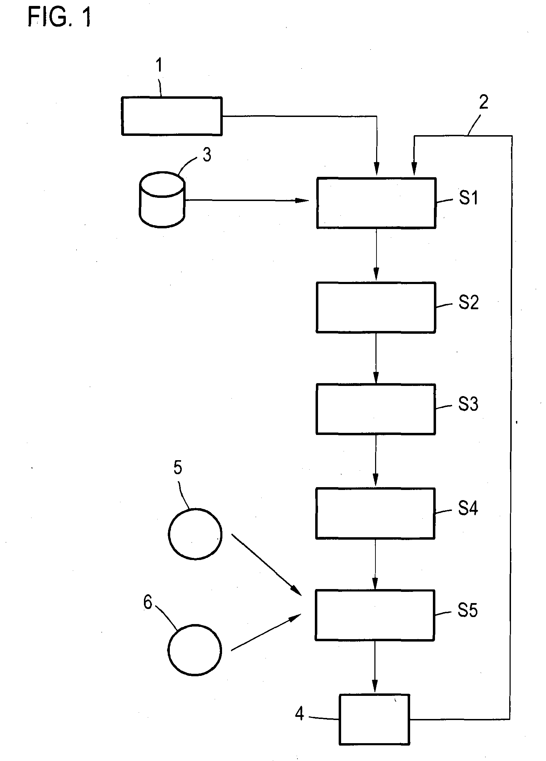

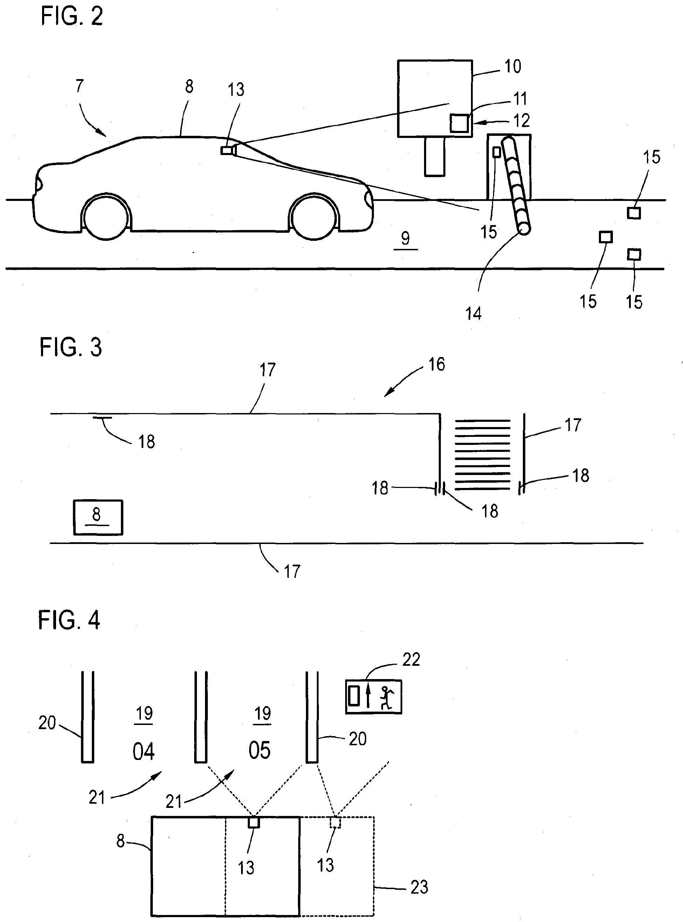

Das erfindungsgemäße Verfahren zum Betrieb eines Positionsbestimmungssystems, welches Teil eines Navigationssystems sein kann, soll zunächst allgemein anhand der Fig. 1 näher erläutert werden, die einen Ablaufplan zeigt. Konkrete Ausführungsbeispiele werden dann im Hinblick auf die Fig. 2 bis 8 diskutiert.

Bei dem in Fig. 1 dargestellten Verfahren geht es um eine Lokalisierung einer mobilen Einheit in einer Navigationsumgebung, die besonders robust und aufwandsarm durchführbar ist. Dabei nutzt das Verfahren zum Betrieb des Positionsbestimmungssystems die zuletzt ermittelte absolute Position der mobilen Einheit in der Navigationsumgebung, welche zu Beginn des Verfahrens eine initiale Position 1 ist; bei späteren Neubestimmungen der Position wird die zuletzt mittels des Verfahrens bestimmte Position verwendet, vgl. Pfeil 2, beide ggf. als Grundlage für eine Grobabschätzung der aktuellen absoluten Position unter Nutzung von die Bewegung der mobilen Einheit beschreibenden Odometriedaten.

Als Grundlage zur Ermittlung einer Positionshypothese verwendet das Verfahren optische Marker, die mit Umgebungssensoren der mobilen Einheit erfasst und durch Bildverarbeitungsalgorithmen in einem Steuergerät des Positionsbestimmungssystems detektiert und identifiziert werden können. Die Detektion solcher optischer Marker kann sich als äußerst komplex und aufwendig erweisen. Um hier den Aufwand deutlich zu senken und Fehldetektionen deutlich zu reduzieren, sieht das Verfahren in einem Schritt S1 vor, Einstellungsdaten zu ermitteln, die unter Berücksichtigung der zuletzt bestimmten Position der mobilen Einheit durch die Umgebungssensoren erfassbare Marker und deren Position bezüglich der mobilen Einheit beschreiben.

Dies ist möglich, da das dargestellte Verfahren darauf basiert, dass nach Detektion und Identifikation der Marker eine relative Position der Marker zu der mobilen Einheit bekannt ist, aus der mittels in einem Kartendatensatz 3 enthaltenen Daten über die Position des identifizierten Markers eine absolute Position der mobilen Einheit festgestellt werden kann. Das bedeutet aber im Umkehrschluss, dass aus einer bekannten bzw. geschätzten absoluten Position der mobilen Einheit auch abgeleitet werden kann, welche optischen Marker sich im Erfassungsbereich der Umgebungssensoren befinden, wenn deren Eigenschaften, insbesondere deren Erfassungsbereiche, ebenso bekannt sind, was üblicherweise in der mobilen Einheit selbst gespeichert ist und zur Bestimmung der relativen Position ohnehin benötigt wird.

Mithin wird im hier dargestellten allgemeinen Ausführungsbeispiel zunächst bei der ersten anstehenden Lokalisierung ausgehend von der initialen Position 1, ansonsten von der zuletzt mithilfe der optischen Marker bestimmten Position 4 ausgehend mithilfe von die Bewegung der mobilen Einheit beschreibenden Informationen, insbesondere Odometriedaten und/oder Daten von Beschleunigungssensoren der mobilen Einheit, eine grobe Abschätzung der aktuellen Position der mobilen Einheit vorgenommen, auf die bezogen durch die Umgebungssensoren sichtbare Marker, insbesondere deren Position im Erfassungsbereich, bestimmt werden. Hierzu kann der Kartendatensatz 3 zweckmäßigerweise auch Informationen über Sichthindernisse, beispielsweise Wände, enthalten.

Werden optische Marker verwendet, die sich in ihrer Art derart unterscheiden, dass unterschiedliche Bildverarbeitungsalgorithmen oder zumindest unterschiedliche Parametrisierungen der verwendeten Bildverarbeitungsalgorithmen benötigt werden, ist der Beschreibung der Marker und ihrer absoluten Position im Kartendatensatz 3 auch eine Klassenangabe zugeordnet, nachdem die Marker in unterschiedliche Klasse klassifizierbar sind. Auch derartige Informationen bilden dann einen Teil der Einstellungsdaten.

In einem Schritt S2 werden die Einstellungsdaten genutzt, um eine Vorauswahl an Sensordaten der optischen Umgebungssensoren der mobilen Einheit vorzunehmen. Dabei wird ausgewählt, die Sensordaten welches Umgebungssensors auf die Präsenz von Markern ausgewertet werden sollen, zudem aber auch, welche Anteile der von dem jeweiligen Umgebungssensor aufgenommenen Bilder überhaupt relevant sind. Das bedeutet, es wird ein Bildausschnitt festgelegt, in dem voraussichtlich ein bestimmter Marker detektiert werden kann, und zwar für alle detektierbaren Marker. Ist auch die Klasse des in dem Bildausschnitt zu detektierenden Markers bekannt, was insbesondere bei der Mitverwendung von originär einem anderen Zweck dienenden Merkmalen als Marker zweckmäßig ist, erfolgt im Schritt S2 zudem eine Auswahl und/oder Parametrisierung der Bildverarbeitungsalgorithmen, beispielsweise auch im Hinblick auf Schwellwerte und/oder Filtertechniken. Auf diese Weise wird eine verlässliche, robuste und weniger Rechenaufwand zur Folge habende Detektion und Identifikation von Markern in den folgenden Schritten gewährleistet, nachdem die auszuwertenden Sensordaten stark eingeschränkt werden können und passende bzw. passend parametrierte Bildverarbeitungsalgorithmen eingesetzt werden.

Es sei an dieser Stelle noch angemerkt, dass zweckmäßigerweise die Kartendatenbank 3 in der mobilen Einheit selbst abgespeichert ist, alle zur Durchführung des Verfahrens benötigten Informationen in der mobilen Einheit selbst vorliegen. Das Einspeichern in die mobile Einheit kann beispielsweise gemeinsam mit der Ermittlung der initialen Position 1 erfolgen, indem der Kartendatensatz insbesondere an einem Zugang zu der Navigationsumgebung optisch ausgelesen wird oder anderweitig an die mobile Einheit übertragen wird, worauf im Folgenden noch näher eingegangen werden wird.

Ferner sei darauf hingewiesen, dass bei der in den Schritten S1 und S2 vorgenommenen Einschränkung der auswertenden Sensordaten auch ein die Verlässlichkeit der zuletzt bestimmten Position der mobilen Einheit angebendes Verlässlichkeitsdatum, insbesondere ein Qualitäts- und/oder Fehlerwert, berücksichtigt werden kann, so dass je nach Genauigkeit der zuletzt bestimmten Position des Kraftfahrzeugs die Einschränkung enger oder weiter gefasst werden kann.

In einem Schritt S3 erfolgt dann die Detektion und Identifikation der Marker auf der eingeschränkten Menge der Sensordaten mit den gegebenenfalls ausgewählten und/oder parametrisierten Bilderverarbeitungsalgorithmen. Ergebnis des Schrittes S3 ist mithin wenigstens eine relative Position der mobilen Einheit relativ zu einem Marker, wobei dann, wenn mehrere Marker erfasst werden können, selbstverständlich auch mehrere relative Positionen bestimmt werden können.

In einem Schritt S4 wird nun eine Positionshypothese für die Ermittlung der absoluten Position der mobilen Einheit anhand der optischen Marker ermittelt. Hierzu wird ausgehend von der aus dem Kartendatensatz 3 bekannten absoluten Position des Markers mittels der relativen Position von Marker und mobiler Einheit eine absolute Positionshypothese der mobilen Einheit ermittelt. Eine Besonderheit ergibt sich, wenn zwei oder mehr Marker detektiert und identifiziert wurden, da dann durch Triangulation die Position genauer bestimmt werden kann. Sollten bei der Triangulation mehrere mögliche Positionen auftreten, können abgelegene Positionshypothesen durch Betrachtung der Positionshistorie und/oder Bewegung der mobilen Einheit (Odometriedaten, Beschleunigungssensoren) ausgeschlossen werden.

In einem Schritt S5 wird die in Schritt S4 ermittelte Marker-Positionshypothese mit weiteren Positionshypothesen 5, 6 auf bekannte Art und Weise fusioniert, um den bestmöglichen Wert für die aktuelle Position 4 der mobilen Einheit zu erhalten. Im vorliegenden Ausführungsbeispiel stammt die weitere Positionshypothese 5 aus den Odometriedaten bzw. die Bewegung der mobilen Einheit beschreibenden Beschleunigungssensordaten der mobilen Einheit, während die Positionshypothese 6 anhand der Empfangsstärken verschiedener WLAN-Basisstationen ermittelt wurde. Hierzu sind in dem Kartendatensatz verschiedenen möglichen Positionen zugeordnet "Fingerprints" von Empfangsfeldstärken abgespeichert, so dass durch Vergleich der aktuellen Empfangsfeldstärken mit den gespeicherten Empfangsfeldstärken ebenso eine Positionshypothese aufgestellt werden kann. Selbstverständlich sind auch Ausführungsbeispiele denkbar, in denen weniger, mehr und/oder andere Positionshypothesen in die Fusion im Schritt S5 eingehen, beispielsweise auf globalen Navigationssatellitensystemen basierende Positionshypothesen und dergleichen.

Im Folgenden sollen nun einige konkrete Ausführungsbeispiele anhand der Fig. 2 bis 8 näher erläutert werden. Fig. 2 zeigt ein als mobile Einheit 7 verwendetes Kraftfahrzeug 8 im Zugangsbereich 9, hier Einfahrtsbereich, eines Parkhauses als Navigationsumgebung. Eine Tafel 10 zeigt die Hausordnung und wurde um einen zweidimensionalen Strichcode 11, hier ein QR-Tag, als optischen Informationsträger 12 ergänzt. In dem zweidimensionalen Strichcode 11 ist der Kartendatensatz 3 optisch eincodiert, so dass er durch Erfassung mit dem optischen Umgebungssensor 13 des Kraftfahrzeugs 8 und nachfolgende Bildverarbeitung ermittelt und im Kraftfahrzeug 8 gespeichert werden kann. Auf diese Weise ist eine einfache Übermittlung des Kartendatensatzes 3 an die mobile Einheit 7 möglich, die ohne Funkübertragung und dergleichen auskommt.

Im Zugangsbereich 9 ist auch eine Bestimmung einer initialen Position 1 mittels der Umgebungssensoren 13 möglich, nachdem nicht nur eine dort vorgesehene Schranke 14 als ohnehin vorgesehener optischer Marker eingesetzt werden kann, der meist auch recht auffällig gestaltet ist, sondern zudem zusätzliche optische Marker 15, vorliegend AR-Tags, in einer speziellen Anordnung vorgesehen sind, die eine äußerst genaue initiale Positionsbestimmung ermöglicht. Die Marker 15 können mithin als Zugangsmarker aufgefasst werden. Sie können selbstverständlich auch im weiteren Verlauf des Verfahrens noch als optischer Marker eingesetzt werden.

Fig. 3 zeigt das Kraftfahrzeug 8 in einem weiteren Bereich der als Parkhaus ausgebildeten Navigationsumgebung 16. An verschiedenen Wänden 17 wurden zusätzlich als AR-Tags ausgebildete optische Marker 18 angebracht, deren absolute Positionen im Kartendatensatz 3 gespeichert sind und die, solange eine Sichtlinie besteht und sie im Erfassungsbereich liegen, von den Umgebungssensoren 13 des Kraftfahrzeugs 8 erfasst werden können.

Es sind jedoch auch zusätzlich oder alternativ Ausführungsbeispiele denkbar, in denen originär einem weiteren (anderen) Zweck dienende Umgebungsmerkmale der Navigationsumgebung 16 als Marker verwendet werden, wie dies durch Fig. 4 dargestellt wird. Dort ist das Kraftfahrzeug 8 im Bereich von Parkplätzen 19 zu sehen. Die Parkplätze 19 sind durch Fahrbahnmarkierungen 20 voneinander getrennt und weisen Parkplatznummern 21 auf. Über einem hier nicht näher gezeigten Notausgang ist ein Notausgangsschild 22 zu erkennen. Die Fahrbahnmarkierungen 20, die Parkplatznummern 21 und das Notausgangsschild 22 können als originär einem anderen Zweck dienende Umgebungsmerkmale aufgefasst werden, die zusätzlich als optische Marker verwendet werden können. Sie sind aufgrund ihrer Natur als genormt vorgesehene Hinweismittel leicht zu erkennen, auch im Rahmen einer Bildverarbeitung. Dies gilt insbesondere, wenn im Kartendatensatz 3 den Umgebungsmerkmalen als Marker auch eine Klasse zugeordnet ist, mithin in den Sensordaten gezielt beispielsweise nach Notausgangsschildern 22 gesucht werden kann. Vorliegend befinden sich an der durchgezogenen Position des Kraftfahrzeugs 8 Fahrbahnmarkierungen 20 und eine Parkplatznummer 21 im strichliert angedeuteten Erfassungsbereich eines seitlichen Umgebungssensors 13.

Bis das nächste Mal eine absolute Position bestimmt werden kann, kann sich das Kraftfahrzeug 8 beispielsweise an die strichliert dargestellte, anhand der Odometriedaten grob abschätzbare Position 23 bewegt haben, in der der Umgebungssensor 13 ersichtlich das Notausgangsschild 22 in einem zentralen oberen Bildausschnitt aufnehmen wird. Dies wird anhand der Einstellungsdaten in den Schritten S1, S2 ermittelt und zur Einschränkung der Sensordaten und zur Auswahl und/oder Parametrierung der Bildverarbeitungsalgorithmen verwendet.

Selbstverständlich sind auch andere "natürliche" Marker, die originär einem anderen Zweck dienen, denkbar, beispielsweise Feuerlöscherhinweisschilder, Parkdecks identifizierende Farbmarkierungen, Werbeplakate und dergleichen.

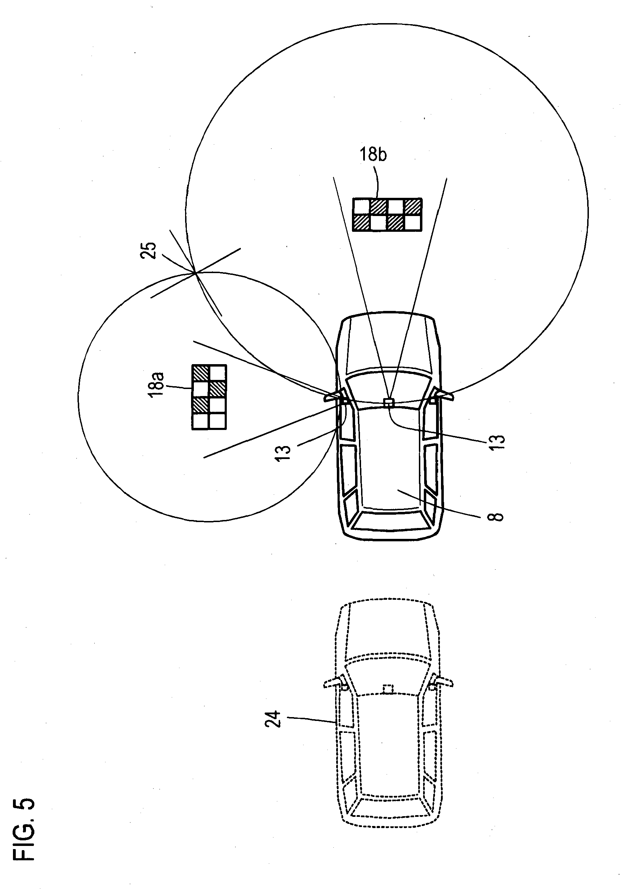

Fig. 5 zeigt in Form einer groben Prinzipskizze mögliche Verbesserungen der Positionsbestimmung durch Triangulation. Die beiden als AR-Tags ausgebildeten Marker 18a, 18b werden ersichtlich von jeweils einem Umgebungssensor 13 des Kraftfahrzeugs 8 erfasst. Damit sind nun zwei relative Positionen des Kraftfahrzeugs 8 zu zwei absoluten Positionen der Marker 18a, 18b bekannt, so dass die Positionsbestimmung genauer möglich wird. Sollte ein Fall auftreten, in dem mehrere mögliche absolute Positionen des Kraftfahrzeugs 8 als Positionshypothesen ermittelt werden können, können offensichtlich aufgrund der Betrachtung der durch die vorherige Position 24 angedeuteten Positionshistorie und/oder von Odometriedaten des Kraftfahrzeugs 8 offensichtlich ungültige mögliche Positionen 25 ausgeschlossen werden.

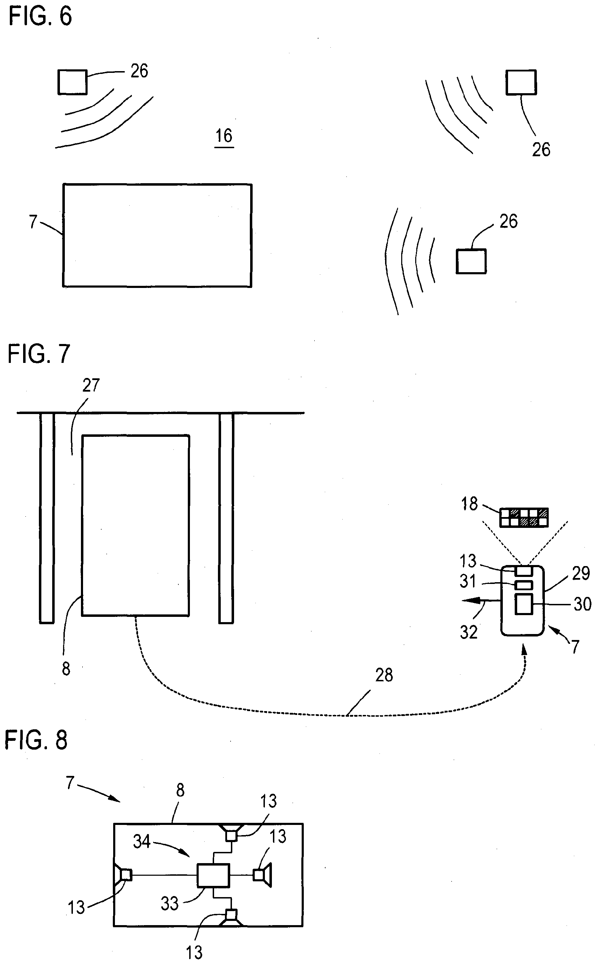

Fig. 6 zeigt schließlich allgemein eine Skizze einer mobilen Einheit 7 in der Navigationsumgebung 16, in der WLAN-Basisstation 26 an verschiedenen Orten angeordnet sind. Betrachtet man die Empfangsfeldstärken der verschiedenen Basisstationen 26 als Datensatz, ergibt sich eine Art "Fingerprint", der eine zumindest grobe Abschätzung der Position in der Navigationsumgebung 16 erlaubt, nachdem derartige "Fingerprints" für verschiedene Positionen in der Navigationsumgebung 16 in dem Kartendatensatz 3 abgespeichert werden können.

Das dargestellte Positionsbestimmungsverfahren, das als Ergebnis eine aktuelle absolute Position 4 der mobilen Einheit 7 in der Navigationsumgebung 16 liefert, die selbstverständlich auch eine Orientierung der mobilen Einheit 7 umfasst, kann zweckmäßig zu Navigationszwecken innerhalb der Navigationsumgebung 16 eingesetzt werden. In Parkhäusern als Navigationsumgebung 16 ist dies sowohl für Kraftfahrzeuge 8 als mobile Einheiten 7 zweckmäßig, die zu einem freien Parkplatz / der Ausfahrt geleitet werden können, als auch für mobile Endgeräte als mobile Einheit 7, nachdem diese einen Fahrer auch wieder zu dem Kraftfahrzeug 8 führen können (oder zu anderen Zielen innerhalb der Navigationsumgebung 16). Dies ist durch Fig. 7 näher erläutert. Dort ist das Kraftfahrzeug 8 auf einem Parkplatz 27 abgestellt. Die nun zuletzt ermittelte aktuelle Position des Kraftfahrzeugs 8 als mobile Einheit 7 entspricht der Parkposition. Sie wird nach dem Abstellen des Kraftfahrzeugs 8 auf dem Parkplatz 27 gemäß dem Pfeil 28 an das mobile Endgerät 29 als weitere mobile Einheit 7 übertragen. Dabei ist es zweckmäßig, wenn auch der Kartendatensatz 3 übermittelt wird. Das beispielsweise als Smartphone ausgebildete mobile Endgerät 29 ist als mobile Einheit 7 tauglich, nachdem mit der eingebauten Kamera als Umgebungssensor 13 ebenso Marker 18 erfasst werden können. Zudem weist das mobile Endgerät 29 eine Beschleunigungssensorik 30, aus der auf Bewegungen des mobilen Endgeräts 29 gefolgert werden kann, sowie in einigen Ausführungsbeispielen auch eine WLAN-Empfangseinheit 31 auf, über die auch Fingerprints bezüglich der WLAN-Basisstationen 26 erstellt werden können.

So ist es beispielsweise möglich, unter Realisierung eines Positionsbestimmungssystems auf dem mobilen Endgerät 29 einen Fahrer zu seinem abgestellten Kraftfahrzeug 8 zurück zu navigieren, wie dies durch den Pfeil 32 angedeutet wird.

Fig. 8 zeigt schließlich nochmals eine Prinzipskizze einer mobilen Einheit 7, die als das Kraftfahrzeug 8 ausgebildet ist. Das Kraftfahrzeug 8 umfasst als Umgebungssensoren 13 vorliegend in vier zueinander senkrechten Richtungen ausgerichtete Kameras, von denen eine nach vorne, eine nach hinten und zwei zu jeweils einer Seite hin ausgerichtet sind und die die Umgebung des Kraftfahrzeugs 8 erfassen können. Die Sensordaten der Umgebungssensoren 13 werden über ein Bussystem, beispielsweise einen CAN-Bus oder einen Flex-Ray-Bus, an ein Steuergerät 33 eines Positionsbestimmungssystems 34 übermittelt, wobei das Steuergerät 33 zur Durchführung des erfindungsgemäßen Verfahrens ausgebildet ist. Das bedeutet, es kann die auszuwertenden Sensordaten aufgrund des Wissens über die zuletzt bestimmte Position des Kraftfahrzeugs 8 und den Kartendatensatz 3 geeignet einschränken und bei Bedarf die Bildverarbeitungsalgorithmen auf die Klasse des Markers anpassen.

Das Positionsbestimmungsverfahren 34 kann Teil eines Navigationssystems sein. Selbstverständlich ist das Steuergerät 33 auch mit weiteren, hier nicht näher dargestellten Fahrzeugsystemen verbunden, die beispielsweise Daten für weitere Positionshypothesen und dergleichen liefern können, beispielsweise eine Inertialplattform sowie weitere Sensoren zur Erfassung der Odometriedaten, einer Kommunikationseinrichtung zur WLAN-Kommunikation, einem GPS-Sensor und dergleichen.

## Patentansprüche

1. Verfahren zur Ermittlung der absoluten Position einer mobilen Einheit (7), die wenigstens einen optischen, einen Erfassungsbereich des Umfelds der mobilen Einheit (7) aufnehmenden Umgebungssensor (13) aufweist, in einer vorbestimmten Navigationsumgebung (16), wobei optische, von dem Umgebungssensor (13) erfassbare, unterscheidbare Marker (15, 18) in der Navigationsumgebung (16) verwendet werden, welchen jeweils eine aus einem Kartendatensatz (3) abrufbare absolute Position zugeordnet ist, wobei zur Positionsbestimmung wenigstens ein Marker (15, 18) in von wenigstens einem des wenigstens einen Umgebungssensors (13) aufgenommenen Sensordaten mittels eines Bildverarbeitungsalgorithmus detektiert und identifiziert wird und unter Berücksichtigung der Position des Markers (15, 18) in den Sensordaten eine relative Position zwischen der mobilen Einheit (7) und dem Marker (15, 18) ermittelt wird, und eine absolute Position (4) der mobilen Einheit (7) in Abhängigkeit von der relativen Position und der absoluten Position des Markers (15, 18) ermittelt wird,
wobei unter Berücksichtigung der zuletzt unter Berücksichtigung des Markers (15, 18) bestimmten Position der mobilen Einheit (7) Einstellungsdaten, die durch die Umgebungssensoren (13) zum aktuellen Zeitpunkt erfassbare Marker (15, 18) und deren Position bezüglich der mobilen Einheit (7) beschreiben, unter Verwendung des Kartendatensatzes (3) ermittelt werden und zur Einschränkung der von den Umgebungssensoren (13) aufgenommenen, zum aktuellen Zeitpunkt vorliegenden Sensordaten, die zur Detektion und Identifikation eines der aktuell erfassbaren Marker (15, 18) auszuwerten sind, verwendet werden,
wobei als Einschränkung nur ein Ausschnitt eines in den Sensordaten enthaltenen Bildes, in dem ein Marker (15, 18) erwartet wird, ausgewertet wird,
**dadurch gekennzeichnet, dass** der Kartendatensatz (3) Informationen zu möglichen Sichthindernissen enthält, die bei der Ermittlung der Einstellungsdaten berücksichtigt werden.

2. Verfahren nach Anspruch 1,
**dadurch gekennzeichnet,**
**dass** als Einschränkung nur Sensordaten von Umgebungssensoren (13), in deren Erfassungsbereich ein Marker (15, 18) erwartet wird, ausgewertet werden.

3. Verfahren nach Anspruch 1 oder 2,
**dadurch gekennzeichnet,**
**dass** in dem Kartendatensatz (3) die nach wenigstens einer Eigenschaft klassifizierbaren Marker (15, 18) und ihre Klasse gespeichert sind, wobei wenigstens ein zur Auswertung der Sensordaten eingesetzter Bildverarbeitungsalgorithmus und/oder eine Parametrierung des Bildverarbeitungsalgorithmus in Abhängigkeit der Klasse des in den Sensordaten zu detektierenden und zu identifizierenden Markers (15, 18) gewählt wird.

4. Verfahren nach einem der vorangehenden Ansprüche,
**dadurch gekennzeichnet,**
**dass** zur Ermittlung der aktuellen Position eine aus der Auswertung der Sensordaten bezüglich der Marker (15, 18) abgeleitete Positionshypothese mit wenigstens einer weiteren Positionshypothese (5, 6) fusioniert wird.

5. Verfahren nach Anspruch 4,
**dadurch gekennzeichnet,**
**dass** die oder eine weitere Positionshypothese (5) aus Odometriedaten und/oder Beschleunigungssensordaten wenigstens eines Beschleunigungssensors der mobilen Einheit (7) ermittelt wird und/oder die oder eine weitere Positionshypothese aus von mit Sensoren der Navigationsumgebung (16) gewonnenen Hypothesendaten und/oder die oder eine weitere Positionshypothese (6) anhand der Empfangsstärke wenigstens eines WLAN-Signals an der aktuellen Position der mobilen Einheit (7) ermittelt wird.

6. Verfahren nach Anspruch 5,
**dadurch gekennzeichnet,**
**dass** ein Positionen in der Navigationsumgebung (16) zugeordnete WLAN-Empfangsstärken umfassender Kartendatensatz (3) verwendet wird.

7. Verfahren nach einem der vorangehenden Ansprüche,
**dadurch gekennzeichnet,**
**dass** eine initiale Position (1) im Bereich (9) eines Zugangs der Navigationsumgebung (16) ermittelt wird, insbesondere durch Detektion und Identifikation wenigstens eines Zugangsmarkers (15) in den Sensordaten der Umgebungssensoren (13).

8. Verfahren nach einem der vorangehenden Ansprüche,
**dadurch gekennzeichnet,**
**dass** als zuletzt ermittelte Position zur Ermittlung der Einstellungsdaten eine unter Berücksichtigung von Odometriedaten und/oder Beschleunigungssensordaten wenigstens eines Beschleunigungssensors (30) der mobilen Einheit (7) ermittelte Positionshypothese ausgehend von der zuvor zuletzt unter Nutzung einer Auswertung der Sensordaten bezüglich der Marker (15, 18) ermittelten Position der mobilen Einheit (7) verwendet wird.

9. Verfahren nach einem der vorangehenden Ansprüche,
**dadurch gekennzeichnet,**
**dass** eine Qualitäts- und/oder Fehlerangabe der zuletzt bestimmten Position bei der Stärke der Einschränkung der zur Detektion und Identifikation des wenigstens einen Markers (15, 18) auszuwertenden Sensordaten der Umgebungssensoren (13) berücksichtigt wird.

10. Verfahren nach einem der vorangehenden Ansprüche,
**dadurch gekennzeichnet,**
**dass** der Kartendatensatz (3) in der mobilen Einheit (7) gespeichert wird.

11. Verfahren nach Anspruch 10,
**dadurch gekennzeichnet,**
**dass** der Kartendatensatz (3) aus den Sensordaten des wenigstens einen Umgebungssensors (13) nach Aufnahme eines Bildes eines die Kartendaten optisch verschlüsselnden Informationsträgers (12) ermittelt wird.

12. Verfahren nach Anspruch 11,
**dadurch gekennzeichnet,**
**dass** als Informationsträger (12) ein zweidimensionaler Strichcode (11) verwendet wird.

13. Verfahren nach einem der vorangehenden Ansprüche,
**dadurch gekennzeichnet,**
**dass** bei einer Detektion und Identifikation von wenigstens zwei Markern (15, 18) während eines Positionsbestimmungsvorgangs eine Triangulation aufgrund der relativen Positionen der Marker (15, 18) zu der mobilen Einheit (7) vorgenommen wird.

14. Verfahren nach Anspruch 13,
**dadurch gekennzeichnet,**
**dass** bei mehreren möglichen, im Rahmen der Triangulation auftretenden absoluten Positionen der mobilen Einheit (7) eine absolute Position (25) anhand von Odometriedaten und/oder Beschleunigungssensordaten wenigstens eines Beschleunigungssensors (30) der mobilen Einheit (7) ausgewählt wird.

15. Verfahren nach einem der vorangehenden Ansprüche,
**dadurch gekennzeichnet,**
**dass** als mobile Einheit (7) ein Kraftfahrzeug (8) und/oder ein mobiles Endgerät (29) verwendet werden.

16. Verfahren nach Anspruch 15,
**dadurch gekennzeichnet,**
**dass** bei einem Abstellen eines Kraftfahrzeugs (8) als mobile Einheit (7) innerhalb der Navigationsumgebung (16) wenigstens die ermittelte Abstellposition des Kraftfahrzeugs (8) an ein mit dem Kraftfahrzeug (8) verbundenes, als weitere mobile Einheit (7) genutztes mobiles Endgerät (29) übertragen und dort zur Navigation zu dem abgestellten Kraftfahrzeug (8) innerhalb der Navigationsumgebung (16) genutzt wird.

17. Verfahren nach einem der vorangehenden Ansprüche,
**dadurch gekennzeichnet,**
**dass** die Navigationsumgebung (16) ein Parkhaus ist.

18. Verfahren nach einem der vorangehenden Ansprüche,
**dadurch gekennzeichnet,**
**dass** als Marker wenigstens ein originär einem weiteren Zweck dienendes Umgebungsmerkmal der Navigationsumgebung (16) verwendet wird.

19. Verfahren nach Anspruch 18,
**dadurch gekennzeichnet,**
**dass** im Falle eines Parkhauses als Navigationsumgebung (16) Fahrbahnmarkierungen (20) und/oder Parkplatznummern (21) und/oder Notausgangsschilder (22) und/oder Feuerlöscherhinweisschilder und/oder Werbeplakate als Marker verwendet werden.

20. Mobile Einheit (7), umfassend wenigstens einen optischen, einen Erfassungsbereich des Umfelds der mobilen Einheit (7) aufnehmenden Umgebungssensor (13) und ein Positionsbestimmungssystem (34) mit einem zur Durchführung eines Verfahrens nach einem der Ansprüche 1 bis 15 ausgebildeten Steuergerät (33).

## Claims

1. Method for determining the absolute position of a mobile unit (7), which has at least one optical surroundings sensor (13) that captures a detection area of the environment of the mobile unit (7), in a predefined navigation environment (16), wherein optically, distinguishable markers (15, 18) that can be detected by the surroundings sensor (13) are used in the navigation environment (16), which are each assigned an absolute position that is retrievable from a map dataset (3), wherein for position determination, at least one marker (15, 18) is detected and identified, by means of an image processing algorithm, in sensor data recorded by at least one of the at least one surroundings sensors (13), and a relative position between the mobile unit (7) and the marker (15, 18) is determined taking account of the position of the marker (15, 18) in the sensor data, and an absolute position (4) of the mobile unit (7) is determined as a function of the relative position and the absolute position of the marker (15, 18),
wherein adjustment data are determined using the map dataset (3) which describe the markers (15, 18) that can be captured by the surroundings sensors (13) at the current point in time and their position relative to the mobile unit (7), taking into account the last position of the mobile unit (7) determined taking account of the marker (15,18), and are used to limit the sensor data recorded by the surrounding sensors (13) available at the current point in time, which are to be evaluated in order to detect and identify one of the currently distinguishable markers (15, 18), wherein as limitation, only one extract of an image contained in the sensor data in which a marker (15, 18) is expected is evaluated, **characterised in that** the map dataset (3) contains information about potential visual obstacles which is taken into account when determining the adjustment data.

2. Method according to claim 1,
**characterised in that**
as limitation only sensor data from surroundings sensors (13) in the detection area of which a marker (15, 18) is expected are evaluated.

3. Method according to claim 1 or 2,
**characterised in that**
the markers (15, 18) that can be classified by at least one property and their class are stored in the map dataset (3), wherein at least one image processing algorithm and/or a parameterisation of the image processing algorithm used for evaluating the sensor data is selected as a function of the class of the marker (15, 18) to be detected and identified in the sensor data.

4. Method according to any one of the preceding claims,
**characterised in that**
a position hypothesis derived from the evaluation of the sensor data with respect to the marker (15, 18) can be merged with at least one other position hypothesis (5, 6) for determining the current position.

5. Method according to claim 4,
**characterised in that**
the or a further position hypothesis (5) is determined from odometry data and/or acceleration sensor data of at least one acceleration sensor of the mobile unit (7) and/or the or a further position hypothesis is determined from hypothesis data obtained using sensors of the navigation environment (16), and/or the or a further position hypothesis (6) is determined based on the reception strength of at least one wireless local area network (WLAN) signal at the current position of the mobile unit (7).

6. Method according to claim 5,
**characterised in that**
a map dataset (3) is used that includes WLAN reception strengths assigned to positions in the navigation environment (16).

7. Method according to any one of the preceding claims,
**characterised in that**
an initial position (1) is determined in the area (9) of an entrance to the navigation environment (16), particularly by detecting and identifying at least one access marker (15) in the sensor data of the surroundings sensors (13).

8. Method according to any one of the preceding claims,
**characterised in that**
a position hypothesis determined taking into account odometry data and/or acceleration sensor data of at least one acceleration sensor (30) of the mobile unit (7) is used as the last determined position for determining the adjustment data, starting from the position of the mobile unit (7) determined previously using an evaluation of the sensor data with respect to the markers (15, 18).

9. Method according to any one of the preceding claims,
**characterised in that**
a quality and/or error specification of the last determined position is considered when determining the degree of limitation of the sensor data of the surroundings sensors (13) to be evaluated for the detection and identification of the at least one marker (15, 18).

10. Method according to any one of the preceding claims,
**characterised in that**
the map dataset (3) is stored in the mobile unit (7).

11. Method according to claim 10,
**characterised in that**
the map dataset (3) is determined from the sensor data of the at least one surroundings sensor (13) after recording an image of an information carrier (12) which optically encrypts the map data.

12. Method according to claim 11,
**characterised in that**
a two-dimensional bar code (11) is used as the information carrier (12).

13. Method according to any one of the preceding claims,
**characterised in that**
a triangulation based on the relative positions of the markers (15, 18) to the mobile unit (7) is performed when detecting and identifying at least two markers (15, 18) in a single positioning process.

14. Method according to claim 13,
**characterised in that**
if multiple potential absolute positions of the mobile unit (7) occur in a triangulation, an absolute position (25) is selected based on odometry data and/or acceleration sensor data of at least one acceleration sensor (30) of the mobile unit (7).

15. Method according to any one of the preceding claims,
**characterised in that**
a motor vehicle (8) and/or a mobile end device (29) are used as a mobile unit (7).

16. Method according to claim 15,
**characterised in that**
when a motor vehicle (8) as a mobile unit (7) is parked in a navigation environment (16), at least the determined parking position of the motor vehicle (8) is transmitted to a mobile end device (29) that is connected to the motor vehicle (8) and used as another mobile unit (7), and is used there for navigation to the parked motor vehicle (8) within the navigation environment (16).

17. Method according to any one of the preceding claims,
**characterised in that**
the navigation environment (16) is a multi-storey car park.

18. Method according to any one of the preceding claims,
**characterised in that**
an environmental feature of the navigation environment (16) which at least originally was serving another purpose is used as a marker.

19. Method according to claim 18,
**characterised in that**
if the navigation environment (16) is a multi-storey car park, lane markings (20) and/or parking bay numbers (21) and/or emergency exit signs (22) and/or fire extinguisher signs and/or advertising posters are used as markers.

20. Mobile unit (7) including at least one optical surroundings sensor (13) which captures a detection area of the environment of the mobile unit (7) and a positioning system (34) with a control unit (33) configured to perform the method according to any one of claims 1 to 15.

## Revendications

1. Procédé de détermination de la position absolue d'une unité mobile (7), qui comporte au moins un capteur d'environnement (13) optique, couvrant une zone de détection de l'environnement de l'unité mobile (7), dans un environnement de navigation (16) prédéterminé,
dans lequel des repères (15, 18) visuels, détectables par le capteur d'environnement (13) et différenciables sont utilisés dans l'environnement de navigation (16), une position absolue interrogeable dans un jeu de données cartographiques (3) étant associée à chacun desdits repères,
dans lequel, en vue de la détermination de position, au moins un repère (15, 18) est détecté et identifié au moyen d'un algorithme de traitement d'image dans des données de capteur détectées par au moins l'un des un ou plusieurs capteurs d'environnement (13) et une position relative entre l'unité mobile (7) et le repère (15, 18) est déterminée en tenant compte de la position du repère (15, 18) dans les données de capteur et une position absolue (4) de l'unité mobile (7) est déterminée en fonction de ladite position relative et de la position absolue du repère (15, 18),
dans lequel, en tenant compte de la dernière position de l'unité mobile (7) déterminée sur la base du repère (15, 18), des données de réglage qui décrivent des repères (15, 18) détectables par les capteurs d'environnement (13) à l'instant actuel et leur position par rapport à l'unité mobile (7) sont déterminées en utilisant le jeu de données cartographiques (3) et sont utilisées pour restreindre les données de capteur existantes à l'instant actuel qui sont détectées par les capteurs d'environnement (13) et qui sont à évaluer pour la détection et l'identification d'un des repères (15, 18) actuellement détectables,
dans lequel, comme restriction, on évalue dans une image contenue dans les données de capteur seulement un extrait dans lequel un repère (15, 18) est attendu,
**caractérisé en ce que** le jeu de données cartographiques (3) contient des informations qui concernent des obstacles possibles à la vision et qui sont prises en compte lors de la détermination des données de réglage.

2. Procédé selon la revendication 1, **caractérisé en ce que**, comme restriction, on évalue seulement des données de capteur de capteurs d'environnement (13) dans la zone de détection desquels un repère (15, 18) est attendu.

3. Procédé selon la revendication 1 ou 2, **caractérisé en ce que** dans le jeu de données cartographiques (3) sont mémorisés les repères (15, 18) classables selon au moins une propriété ainsi que leur classe, au moins un algorithme de traitement d'image utilisé pour l'évaluation des données de capteur et/ou un paramétrage de l'algorithme de traitement d'image étant choisis en fonction de la classe du repère (15, 18) à détecter dans les données de capteur et à identifier.

4. Procédé selon l'une des revendications précédentes, **caractérisé en ce que**, pour la détermination de la position actuelle, une hypothèse de position déduite de l'évaluation des données de capteur concernant les repères (15, 18) est fusionnée avec au moins une autre hypothèse de position (5, 6).

5. Procédé selon la revendication 4, **caractérisé en ce que** l'hypothèse de position ou une autre hypothèse de position (5) est déterminée à partir de données odométriques et/ou de données de capteur d'accélération d'au moins un capteur d'accélération de l'unité mobile (7) et/ou l'hypothèse de position ou une autre hypothèse de position est déterminée à partir de données d'hypothèse obtenues avec des capteurs de l'environnement de navigation (16) et/ou l'hypothèse de position ou une autre hypothèse de position (6) est déterminée à l'aide de l'intensité de réception d'au moins un signal WLAN au niveau de la position actuelle de l'unité mobile (7).

6. Procédé selon la revendication 5, **caractérisé en ce qu'**un jeu de données cartographiques (3) comprenant des intensités de réception WLAN associées à des positions dans l'environnement de navigation (16) est utilisé.

7. Procédé selon l'une des revendications précédentes, **caractérisé en ce qu'**une position initiale (1) dans la zone (9) d'un accès de l'environnement de navigation (16) est déterminée, en particulier grâce à la détection et à l'identification d'au moins un repère d'accès (15) dans les données de capteur des capteurs d'environnement (13).

8. Procédé selon l'une des revendications précédentes, **caractérisé en ce que**, comme dernière position déterminée, on utilise en vue de la détermination des données de réglage une hypothèse de position déterminée en tenant compte de données odométriques et/ou de données de capteur d'accélération d'au moins un capteur d'accélération (30) de l'unité mobile (7) en se basant sur la dernière position de l'unité mobile (7) qui a été déterminée auparavant en utilisant une évaluation des données de capteurs concernant les repères (15, 18).

9. Procédé selon l'une des revendications précédentes, **caractérisé en ce qu'**une indication de qualité et/ou d'erreur de la dernière position déterminée est prise en compte au niveau de l'intensité de la restriction des données de capteur des capteurs d'environnement (13) qui sont à évaluer pour la détection et l'identification de l'au moins un repère (15, 18).

10. Procédé selon l'une des revendications précédentes, **caractérisé en ce que** le jeu de données cartographiques (3) est mémorisé dans l'unité mobile (7).

11. Procédé selon la revendication 10, **caractérisé en ce que** le jeu de données cartographiques (3) est déterminé à partir des données de capteur de l'au moins un capteur d'environnement (13) après réception d'une image d'un support d'informations (12) codant optiquement les données cartographiques.

12. Procédé selon la revendication 11, **caractérisé en ce que**, comme support d'informations (12), on utilise un code-barres (11) bidimensionnel.

13. Procédé selon l'une des revendications précédentes, **caractérisé en ce que**, lors d'une détection et identification d'au moins deux repères (15, 18) pendant une opération de détermination de position, on effectue une triangulation sur la base des positions relatives des repères (15, 18) par rapport à l'unité mobile (7).

14. Procédé selon la revendication 13, **caractérisé en ce que**, en présence de plusieurs positions absolues possibles de l'unité mobile (7) qui apparaissent dans le cadre de la triangulation, on choisit une position absolue (25) à l'aide de données odométriques et/ou de données de capteur d'accélération d'au moins un capteur d'accélération (30) de l'unité mobile (7).

15. Procédé selon l'une des revendications précédentes, **caractérisé en ce que** l'on utilise comme unité mobile (7) un véhicule automobile (8) et/ou un terminal mobile (29).

16. Procédé selon la revendication 15, **caractérisé en ce que** lors d'un arrêt d'un véhicule automobile (8) comme unité mobile (7) à l'intérieur de l'environnement de navigation (16), on transmet au moins la position de stationnement déterminée du véhicule automobile (8) à un autre terminal mobile (29) relié au véhicule automobile (8) et utilisé comme autre unité mobile (7) et on l'utilise là pour la navigation vers le véhicule automobile arrêté (8) à l'intérieur de l'environnement de navigation (16).

17. Procédé selon l'une des revendications précédentes, **caractérisé en ce que** l'environnement de navigation (16) est un parking.

18. Procédé selon l'une des revendications précédentes, **caractérisé en ce que** l'on utilise comme repère au moins une caractéristique d'environnement, servant initialement dans un autre but, de l'environnement de navigation (16).

19. Procédé selon la revendication 18, **caractérisé en ce que**, dans le cas d'un parking comme environnement de navigation (16), on utilise comme repères des marquages au sol (20) et/ou des numéros d'emplacement de stationnement (21) et/ou des pancartes de sortie de secours (22) et/ou des pancartes de signalisation d'extincteurs et/ou des pancartes publicitaires.

20. Unité mobile (7), comprenant au moins un capteur d'environnement (13) optique couvrant une zone de détection de l'environnement de l'unité mobile (7) et un système de détermination de position (34) avec un appareil de commande (33) conçu pour la mise en oeuvre d'un procédé selon l'une des revendications 1 à 15.
